# EUROPÄISCHE PATENTSCHRIFT

(11) **EP 1 235 623 B1**
(45) Veröffentlichungstag und Bekanntmachung des Hinweises auf die Patenterteilung: **09.07.2003**
(21) Anmeldenummer: 00977544.6
(22) Anmeldetag: 15.11.2000
(51) Int. Cl.: B01D 29/11, B01D 63/06, B01D 29/35, B01D 35/18, F28D 1/00

(54) **FILTERMEMBRANMODUL MIT INTEGRIERTEM WÄRMETAUSCHER**
FILTER MEMBRANE MODULE COMPRISING AN INTEGRATED HEAT EXCHANGER
MODULE MEMBRANAIRE DE FILTRATION AVEC ECHANGEUR DE CHALEUR INTEGRE

(30) Priorität: 30.11.1999 DE 19957641
(43) Veröffentlichungstag der Anmeldung: 04.09.2002
(73) Patentinhaber: MEMBRAFLOW GMBH & CO. KG Filtersysteme, 73457 Aalen-Essingen (DE)
(72) Erfinder: OLAPINSKI, Hans, 73773 Aichwald (DE); BLÄSE, Dieter, 73557 Mutlangen (DE); FEUERPEIL, Hans-Peter, 73529 Schwäbisch Gmünd (DE)
(74) Vertreter: Dr. Weitzel & Partner
(86) Internationale Anmeldenummer: EP0011301
(87) Internationale Veröffentlichungsnummer: WO01039857

(56) Entgegenhaltungen:
- WO-A-88/03829
- WO-A-95/23639
- DE-A- 2 800 425
- DE-A- 3 411 675

## Beschreibung

Die Erfindung betrifft eine Vorrichtung zum Filtrieren von fließfähigen Medien unter Verwendung von porösen, keramischen Stäben. Derartige Vorrichtungen werden in zahlreichen Industriezweigen eingesetzt, beispielsweise in der Lebensmittelindustrie oder in der pharmazeutischen Industrie.

Ein solches Membranmodul ist beispielsweise aus EP 0 270 051 bekannt geworden. EP 0 748 250 B1 beschreibt ein Membranmodul, bei welchem der Ringspalt zwischen dem einzelnen keramischen Stab und der diesen umgebenden Hülse vollständig von Permeat ausgefüllt ist, somit frei von irgendwelchen Festkörpern.

EP 0 333 753 B1 hingegen beschreibt eine Vorrichtung, bei welcher der den Keramikstab umgebende Sammelraum aus einer großen Menge von kleinen Füllkörpem ausgefüllt ist, die dafür sorgen sollen, daß der Treibdruck über die Länge des Keramikstabes so gleichmäßig wie möglich ist.

Vorrichtungen der genannten Art dienen ausschließlich dem Filtrieren von Medien. Hierbei kein ein Temperieren, z. B. Kühlen oder Heizen, des zu filtrierenden Mediums aus Gründen der Filtrationseigenschaften bzw. der Produktschonung erforderlich sein. Gemäß dem Stande der Technik werden zu diesem Zweck besondere Wärmetauscher vorgesehen. Ferner ist es bekannt, Filtermembran-Gehäuse mit Doppelmantel auszustatten, um durch die Zwischenräume ein Heiz- oder Kühlmedium hindurchzuführen.

Dabei ist es wünschenswert, daß im gesamten Membranmodul besonders große Wärmemengen ausgetauscht werden. Ist der Wärmetauschvorgang im Membranmodul ausreichend, so kann gegebenenfalls auf nachgeschaltete Wärmetauscher verzichtet werden.

Der Erfindung liegt die Aufgabe zugrunde, ein Membranmodul gemäß dem Oberbegriff von Anspruch 1 derart zu gestalten, daß dessen Wärmetauschkapazität gegenüber dem vorgenannten Stand der Technik vergrößert wird, und daß dabei der aparative Aufwand und die Herstellungskosten möglichst gering gehalten werden.

Diese Aufgabe wird durch die Merkmale von Anspruch 1 gelöst. Demgemäß wird der einzelne Keramikstab von einem Schlauch umgeben, der sich somit im Ringspalt zwischen der Mantelfläche des Keramikstabes und dem Hüllrohr befindet. Der Schlauch ist durchbrochen, so daß Medium durch ihn hindurch von innen nach außen oder von außen nach innen strömen kann. Der Schlauch erstreckt sich über einen wesentlichen Teil der Länge des Ringspaltes, am besten über dessen gesamte Länge. Der Schlauch kann aus jeglichem Material bestehen, beispielsweise aus Kunststoff oder aus Stahl. Er kann beispielsweise als Gewebe, Geflecht oder Gewirk aufgebaut sein. Er kann aus einer gelochten Hülse bestehen.

Die Grundidee, die dahinter steckt, ist die folgende: Das Medium wird auf seinem Strömungsweg durch den Ringspalt nicht nur in axialer Richtung geführt, sondern es werden ihm auch Radialbewegungen aufgezwungen. Hierbei prallt es gegen die Innenfläche des betreffenden Hüllrohres. Dadurch wird der Wärmeübergang zwischen Medium und Hüllrohr intensiviert, und zwar entweder im Sinne einer Erwärmung oder Kühlung des Mediums, je nach Einzelfall.

Ein solcher Schlauch läßt sich sehr leicht in die Moduleinheit einsetzen, aber auch ebenso leicht herausnehmen, beispielsweise zum Zwecke der Reinigung. Zweckmäßigerweise wird der einzelne Schlauch an der Dichtung fixiert, die sich zwischen dem einen Deckel und dem Gehäuse befindet.

Die Erfindung ist anhand der Zeichnungen erläutert. Darin ist im einzelnen folgendes dargestellt:
- Figur 1: zeigt ein Membranmodul in einer Aufrißansicht.
- Figur 2: zeigt den Gegenstand von Figur 1 in einer Schnittansicht in der Schnittebene A-A in Figur 1, und zwar in vergrößertem Maßstab.
- Figur 3: zeigt die Einzelheit X aus Figur 2 in vergrößertem Maßstab.
- Figur 4: zeigt den oberen Teil des Gegenstandes von Figur 1 in vergrößertem Maßstab.

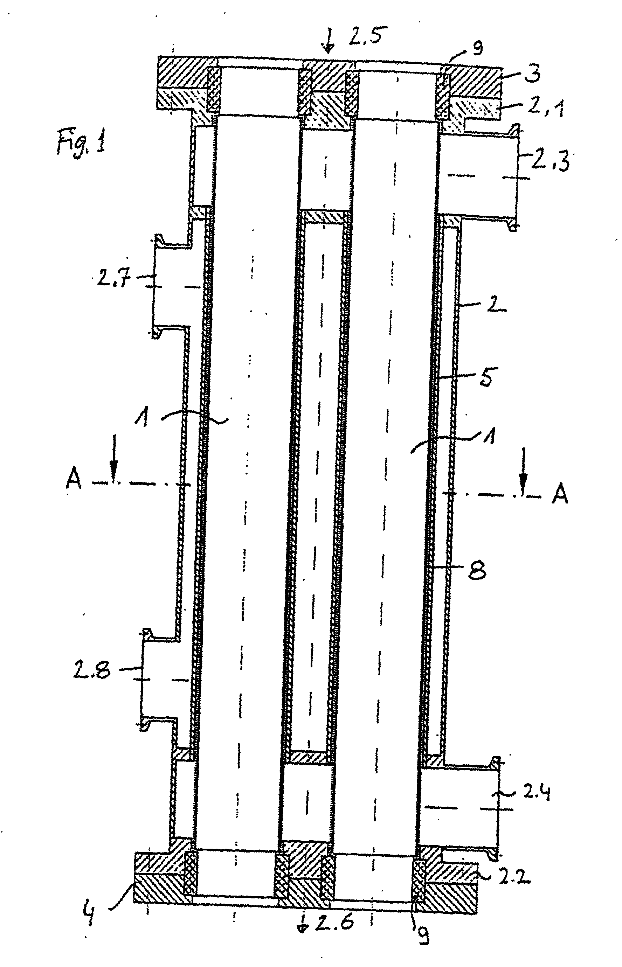

Das Membranmodul ist in Figur 1 nur schematisch dargestellt. Man erkennt zwei Keramikstäbe 1. Diese bestehen aus porösem, keramischen Material.

Diese Stäbe befinden sich in einem Gehäuse 2. Sie sind ferner an ihren beiden Enden in Deckeln eingespannt. Siehe den oberen Deckel 3 und den unteren Deckel 4 mit den Gehäuseflanschen 2.1, 2.2.

Das Gehäuse weist an seinem oberen Ende einen Einlaß 2.5 für das zu behandelnde Medium auf, und an seinem unteren Ende einen Auslaß 2.6. Einlaß und Auslaß sind hier nur durch die Pfeile schematisch angedeutet Man erkennt ferner den Einlaß 2.3 und den Auslaß 2.4 für das Permeat, sowie den Einlaß 2.7 und den Auslaß 2.8 für das Wärmetauschmedium.

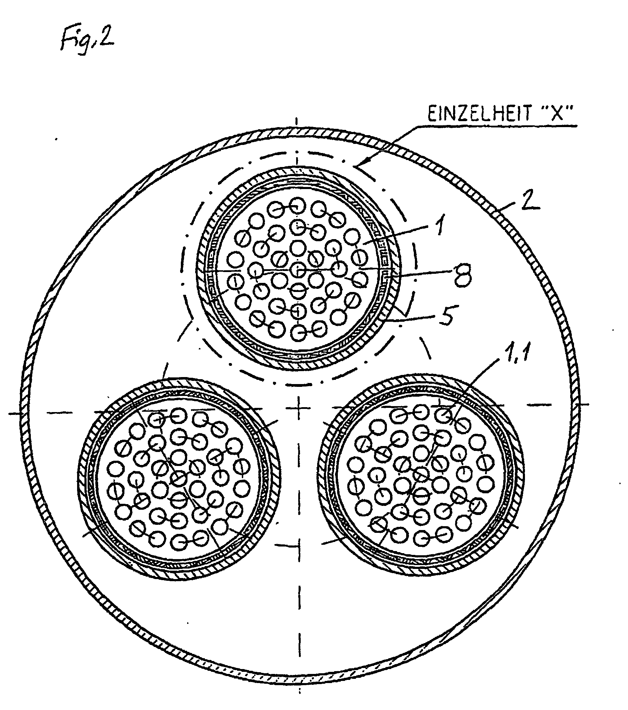

Wie man aus Figur 2 erkennt, umfaßt das Membranmodul drei Keramikstäbe 1. Dies ist jedoch nur ein Beispiel. Jeder Keramikstab 1 ist wiederum mit 37 Durchgangsbohrungen versehen, die sich in Längsrichtung durch den einzelnen Keramikstab von oben bis unten hindurch erstrecken. Dabei ist weder die Anzahl der Keramikstäbe pro Modul noch die Anzahl der Bohrungen pro Keramikstab im Zusammenhang mit der Erfindung von Bedeutung. Es könnten somit auch andere Anzahlen vorgesehen werden.

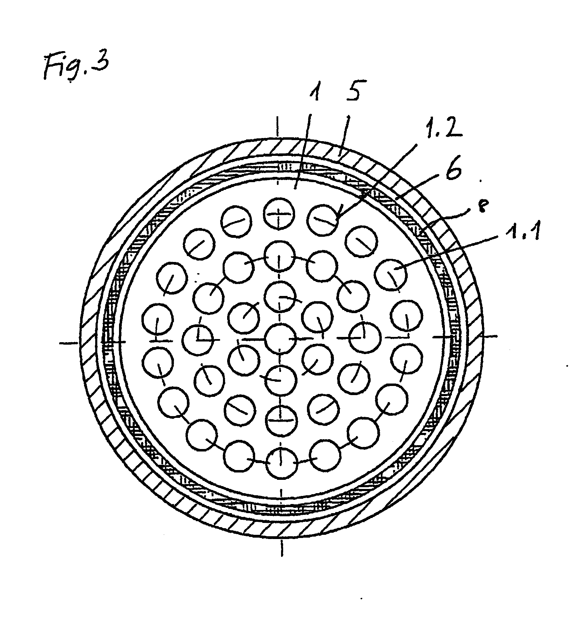

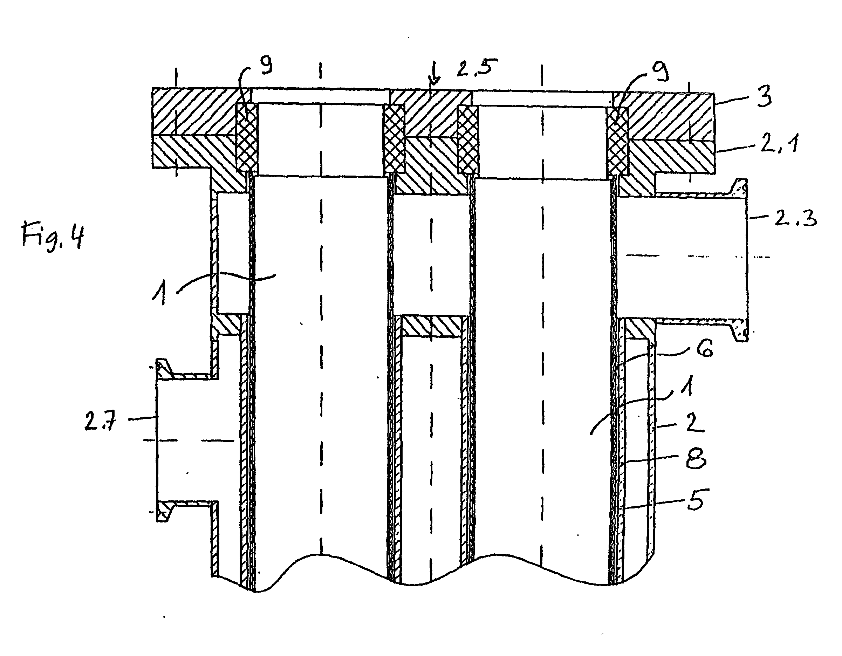

Figur 3 zeigt die Einzelheit X aus Figur 2, wiederum in vergrößerter Darstellung. Wie man sieht, ist der Keramikstab 1 von einem Hüllrohr 5 umgeben. Das Hültrohr 5 hat gegenüber dem Keramikstab 1 Übermaß. Hierdurch ist zwischen der Mantelfläche des Keramikstabes 1 und der Innenfläche des Hüllrohres 5 ein Ringspalt 6 gebildet Der Ringspalt 6 erstreckt sich über die gesamte Länge des Keramikstabes 1. Auf seine Bedeutung soll noch im Zusammenhang mit Figur 4 eingegangen werden.

Die Innenwände der Bohrungen 1.1 sind mit einem Membranmaterial 1.2 beschichtet. Eine solche Beschichtung ist jedoch nur beispielsweise wiedergegeben. Sie ist für die Erfindung nicht entscheidend.

Die entscheidenden Merkmale der Erfindung ergeben sich aus Figur 4. Dabei handelt es sich um den oberen Bereich des Membranmoduls von Figur 1.

Man erkennt wiederum die beiden Keramikstäbe 1, die wie alle anderen Keramikstäbe parallel zueinander verlaufen, somit in Richtung der Längsachse des Membranmoduls. Man erkennt weiterhin einen Einlaß 2.3 für Permeat.

Jeder Keramikstab 1 ist wiederum von einem Hüllrohr 5 konzentrisch umgeben, und zwar derart, daß ein ebenfalls konzentrischer Ringspalt 6 zwischen der Innenfläche des Hüllrohres 5 und der Mantelfläche des zugehörenden Keramikstabes 1 verbleibt.

Gemäß der Erfindung ist jedem Keramikstab 1 ein perforierter Schlauch 8 zugeordnet Der Schlauch 8 umschließt den betreffenden Keramikstab 1 konzentrisch. Er kann den Ringspalt 6 in radialer Richtung völlig ausfüllen, derart, daß der sowohl an der Mantelfläche des Keramikstabes 1, als auch an der Innenfläche des Hüllrohres 5 berührend anliegt. Es kann aber auch ein gewisser Freiraum verbleiben.

Im vorliegenden Falle ist jeder der dargestellten Schläuche 8 zwischen den dazugehörenden Dichtungen 9 fixiert. Auf diese Weise ist ein leichtes Ein- und Ausbauen des betreffenden Schlauches zusammen mit der Dichtung möglich. Eine andere, hier im einzelnen nicht dargestellte Möglichkeit besteht darin, den Schlauch 8 am Gehäuseflansch 2.1. und/oder 2.2 zu fixieren.

Der Schlauch 8 besteht im vorliegenden Falle aus einem Metallgewebe. Er könnte auch aus einem Geflecht oder aus einem Gewirk bestehen. Auch ist es denkbar, den Schlauch als Blechhülse oder Hülse aus einem anderen Werkstoff auszubilden, versehen mit Durchgangsöffnungen, beispielsweise einer Vielzahl von eingestanzten Bohrungen oder Schlitzen. Der Schlauch 8 kann auch aus einem anderen Material als aus Metall hergestellt sein, beispielsweise aus Kunststoff.

Der Schlauch hat die erfindungsgemäße Wirkung: Es wird im Ringspalt 6 eine gewisse Turbulenz erzeugt. Das im Ringspalt von oben nach unten strömende Medium wird ständig umgelenkt und prallt dabei gegen die Innenfläche des Hüllrohres 5. Dabei wird der Wärmeaustausch zwischen dem Medium und dem Hüllrohr 5 intensiviert, was erwünscht ist. Das Medium wird somit intensiver gekühlt oder intensiver erwärmt, je nach Aufgabenstellung der Praxis.

Das Hüllrohr 5 besteht im allgemeinen aus Metall. Es läßt sich in seinen Abmessungen, vor allem in seiner lichten Weite, recht genau herstellen. Anders ist es jedoch mit dem Keramikstab 1. Hierbei kann es zu einem Verziehen kommen, so daß der Keramikstab 1 z. B. um seine Längsachse eine Durchbiegung aufweist. Dies führt wiederum dazu, daß der Ringspalt 6 an verschiedenen Stellen der Länge des Membranmoduls eine unterschiedliche Weite hat Die Erfindung läßt sich gleichwohl ohne weiteres verwirklichen. Die Wandstärke des erfindungsgemäßen Schlauches braucht nämlich nur derart bemessen zu werden, daß sie auch an der engsten Stelle des Ringspaltes 6 genügend Platz hat. Eine gewisse Elastizität der Schlauchstruktur ist in diesem Falle wünschenswert.

Alle Ringspalte 6 stehen miteinander in leitender Verbindung. Sie stehen somit auch mit dem Perrneateinlaß 2.3 und dem Penneatauslaß 2.4 in leitender Verbindung.

## Patentansprüche

1. Membranmodul mit integriertem Wärmetauscher
1.1 mit einer Anzahl von stabförmigen, porösen, keramischen Filterelementen (Keramikstäben) (1);
1.2 die Keramikstäbe (1) weisen achsparallele Durchgangsbohrungen (1.1) auf;
1.3 die Keramikstäbe sind parallel zueinander angeordnet und an ihren Enden von Deckeln (3, 4) eingespannt;
1.4 die Keramikstäbe (1) sind auf ihren Umfängen gegen die Deckel (3, 4) abgedichtet;
1.5 der am einen Ende des Membranmoduls befindliche Deckel (3) weist einen Einlaß (2.1) zum Zuführen des zu behandelnden Mediums auf, und der am anderen Ende befindliche Deckel (4) weist einen Auslaß (2.2) zum Abführen von Medium auf;
1.6 jeder Keramikstab (1) ist von einem Hüllrohr (5) umgeben;
1.7 zwischen der Mantelfläche eines jeden Keramikstabes (1) und der Innenfläche des zugehörenden Hüllrohres (5) befindet sich ein Ringspalt (6);
1.8 die Ringspalte (6) stehen miteinander in leitender Verbindung;
1.9 die Deckel (3, 4), die Keramikstäbe (1) sowie die Hüllrohre (5) sind von einem Gehäuse (2) umschlossen, das mit den Deckeln (3, 4) fest verbunden ist;
1.10 das Gehäuse (2) weist einen Einlaß (2.3) zum Einleiten von Permeat in die Ringspalte (6), und einen Auslaß (2.4) zum Abführen von Permeat aus den Ringspalten (6) auf, ferner einen Einlaß (2.7) und einen Auslaß (2.8) zum Hindurchleiten eines Wärmeträgers durch den Zwischenraum zwischen dem einzelnen Hüllrohr (5) und dem Gehäuse (2);
1.11 jeder Keramikstab (1) ist von einem durchbrochenen Schlauch (8) umgeben, der sich im Ringspalt (6) befindet und der sich wenigstens über einen wesentlichen Teil von dessen Länge erstreckt.

2. Membranmodul nach Anspruch 1, **dadurch gekennzeichnet, daß** sich der Schlauch (8) über die gesamte Länge des Ringspaltes (6) erstreckt.

3. Membranmodul nach Anspruch 1 oder 2, **dadurch gekennzeichnet, daß** der Schlauch (8) aus einem Gewebe, Gewirk oder Geflecht gebildet ist.

4. Membranmodul nach Anspruch 1 oder 2, **dadurch gekennzeichnet, daß** der Schlauch (8) aus einer gelochten oder geschlitzten Hülse gebildet ist.

5. Membranmodul nach einem der Ansprüche 1 bis 4, **dadurch gekennzeichnet, daß** der Schlauch (8) aus Kunststoff gebildet ist.

6. Membranmodul nach einem der Ansprüche 1 bis 4, **dadurch gekennzeichnet, daß** der Schlauch (8) aus Edelstahl gebildet ist.

## Claims

1. Membrane module with integrated heat exchanger
1.1 comprising a plurality of rod-shaped, porous, ceramic filter elements (ceramic rods) (1);
1.2 the ceramic rods (1) have axially parallel through apertures (1.1);
1.3 the ceramic rods are arranged parallel to one another and are fixed at their ends by covers (3, 4);
1.4 the ceramic rods (1) are sealed at their peripheries against the covers (3, 4);
1.5 the cover (3) located at one end of the membrane module has an inlet (2.1) for supplying the medium to be treated and the cover (4) located at the other end has an outlet (2.2) for discharging medium;
1.6 each ceramic rod (1) is surrounded by a sheathing tube (5);
1.7 located between the external surface of each ceramic rod (1) and the inner face of the associated sheathing tube (5) is an annular gap (6);
1.8 the annular gaps (6) are conductively connected to one another;
1.9 the covers (3, 4), the ceramic rods (1) and the sheathing tubes (5) are surrounded by a housing (2) rigidly connected to the covers (3, 4);
1.10 the housing (2) has an inlet (2.3) for introducing permeate into the annular gape (6), and an outlet (2.4) for discharging permeate from the annular gaps (6), and also an inlet (2.7) and an outlet (2.8) for guiding a heat carrier through the gap between the individual sheathing tube (5) and the housing (2);
1.11 each ceramic rod (1) is surrounded by an interrupted hose (8) located in the annular gap (6) and extending at least over a substantial part of the length thereof.

2. Membrane module according to claim 1, **characterised in that** the hose (8) extends over the entire length of the annular gap (6).

3. Membrane module according to claim 1 or 2, **characterised in that** the hose (8) is formed from a woven, knitted or braided textile.

4. Membrane module according to claim 1 or 2, **characterised in that** the hose (8) is made from a perforated or slotted sleeve.

5. Membrane module according to any one of claims 1 to 4, **characterised in that** the hose (8) is formed from plastics material.

6. Membrane module according to any one of claims 1 to 4, **characterised in that** the hose (8) is made of high-grade steel.

## Revendications

1. Module membranaire avec échangeur de chaleur intégré
1.1 avec une pluralité d'éléments filtrants poreux en céramique en forme de bâtonnets (bâtonnets céramiques) **(1)** ;
1.2 les bâtonnets céramiques **(1)** présentent des perçages traversants **(1.1)** parallèles à l'axe ;
1.3 les bâtonnets céramiques sont disposés parallèlement les uns aux autres et serré par des couvercles **(3, 4)** à leurs extrémités ;
1.4 les bâtonnets céramiques **(1)** sont rendus hermétiques sur leurs circonférences contre les couvercles **(3, 4)** ;
1.5 le couvercle **(3)** situé à une extrémité du module de membrane présente une entrée **(2.1)** pour introduire le fluide à traiter, et le couvercle **(4)** situé à l'autre extrémité présente une sortie **(2.2)** pour évacuer le fluide ;
1.6 chaque bâtonnet céramique **(1)** est entouré d'un tube enveloppe **(5)** ;
1.7 entre la surface d'enveloppe de chaque bâtonnet céramique **(1)** et la surface intérieure du tube enveloppe **(5)** associé se trouve une fente annulaire **(6)** ;
1.8 les fentes annulaires **(6)** communiquent entre elles ;
1.9 les couvercles **(3, 4),** les bâtonnets céramiques **(1)** et les tubes enveloppe **(5)** sont entourés d'un boîtier **(2),** qui est relié fermement aux couvercles **(3, 4)** ;
1.10 le boîtier **(2)** présente une entrée **(2.3)** pour introduire du permeat dans les fentes annulaires **(6)** et une sortie **(2.4)** pour évacuer le permeat depuis les fentes annulaires **(6)**, ainsi qu'une entrée **(2.7)** et une sortie **(2.8)** pour faire passer un caloriporteur à travers un espace compris entre chaque tube enveloppe **(5)** et le boîtier **(2)** ;
1.11 chaque bâtonnet céramique **(1)** est entouré d'un tuyau ajouré **(8)** qui se trouve dans la fente annulaire **(6)** et s'étend au moins sur une partie importante de sa longueur.

2. Module membranaire selon la revendication 1, **caractérisé en ce que** le tuyau **(8)** s'étend sur toute la longueur de la fente annulaire **(6).**

3. Module membranaire selon la revendication 1 ou 2, **caractérisé en ce que** le tuyau **(8)** est formé d'un tissu, d'un tricot ou d'un treillis.

4. Module membranaire selon la revendication 1 ou 2, **caractérisé en ce que** le tuyau **(8)** est formé d'une douille perforée ou ajourée.

5. Module membranaire selon l'une des revendications 1 à 4, **caractérisé en ce que** le tuyau (8) est formé en matière plastique.

6. Module membranaire selon l'une des revendications 1 à 4, **caractérisé en ce que** le tuyau **(8)** est formé en acier spécial.
